# EUROPÄISCHE PATENTANMELDUNG

(11) **EP 4 667 240 A1**
(43) Veröffentlichungstag der Anmeldung: **24.12.2025**
(21) Anmeldenummer: 25175945.2
(22) Anmeldetag: 13.05.2025
(51) Int. Cl.: B60C 11/03, B60C 11/13

(54) **FAHRZEUGREIFEN**

(30) Priorität: 18.06.2024 DE 102024205628
(71) Anmelder: Continental Reifen Deutschland GmbH, 30175 Hannover (DE)
(72) Erfinder: Vennebörger, Martin, 30175 Hannover (DE); Heinhaupt, Torsten, 30175 Hannover (DE); Javagal Suresh, Swaroop Sharma, 30175 Hannover (DE); Raghu, Krishnakumar, 30175 Hannover (DE); Steffan, Michael, 30175 Hannover (DE); Scheele, Andrea, 30175 Hannover (DE)
(74) Vertreter: Continental Corporation

(57) **Zusammenfassung**

Fahrzeugreifen mit einem profilierten Laufstreifen mit Schräg- oder Querrillen (1,1'), welche zur Umfangsrichtung unter Winkeln von 15° bis 85° verlaufen, wobei einander kreuzende Schräg- oder Querrillen oder in Umfangsrichtung aufeinanderfolgende Schräg- oder Querrillen (1, 1') verbindende Rillen (2) Profilblöcke (3, 3', 3", 3a, 3'a, 3"a) oder blockartige Profilstrukturen begrenzen und/oder mitbegrenzen, die an den Schräg- oder Querrillen (1,1') von Blockkanten (5a, 5'a, 5"a, 4a, 4'a, 4"a) begrenzt sind.

Die Außenflächen der Profilblöcke (3, 3', 3", 3a, 3'a, 3"a) oder blockartigen Profilstrukturen sind durchgehend nach außen bauchig gewölbt, derart, dass das Maximum der Wölbung jeweils im Bereich einer in Draufsicht gerade verlaufenden Linie (l₃, l_{3'}, l_{3"}) liegt, welche die auf die Kantenlängen bezogenen Mittelpunkte von Blockkanten (5a, 5'a, 5"a, 4a, 4'a, 4"a) verbindet,
wobei die Wölbung der Außenflächen ausgehend von der jeweiligen Linie (l₃, l_{3'}, l_{3"}) fortlaufend in Richtung zu und bis zu seitlichen Blockrändern abnimmt.

## Beschreibung

Die Erfindung betrifft einen Fahrzeugreifen mit einem profilierten Laufstreifen mit vorzugsweise parallel zueinander verlaufenden Schräg- oder Querrillen, welche zur Umfangsrichtung unter Winkeln von 15° bis 85° verlaufen, wobei einander kreuzende Schräg- oder Querrillen oder in Umfangsrichtung aufeinanderfolgende Schräg- oder Querrillen verbindende Rillen, letztere gemeinsam mit den Schräg- oder Querrillen, Profilblöcke oder blockartige Profilstrukturen begrenzen und/oder mitbegrenzen, die an den Schräg- oder Querrillen von Blockkanten sowie von weiteren, zwischen den Enden der Blockkanten verlaufenden Blockrändern begrenzt sind, wobei jeder Blockrand entweder eine Blockkante oder der eine seitliche Rand der Bodenaufstandsfläche ist.

Ein derartiger Fahrzeugreifen ist aus der DE 10 2017 203 221 A1 bekannt. Der Reifen weist einen Laufstreifen mit über die Laufstreifenbreite V-förmig zueinander verlaufenden Schrägrillen auf, welche gemeinsam mit den Profilblöcken Pitches (Profilabschnitte) mit zumindest zwei unterschiedlichen Umfangslängen bilden. Die Profilblöcke sind jeweils mit einem in Draufsicht parallel zu den Schrägrillen verlaufenden, die jeweiligen Profilblöcke durchquerenden Einschnitt versehen, wobei in den Pitches mit der größten Umfangslänge die Einschnitte entlang der Blockmittellinien verlaufen und in den Pitches sonstiger Umfangslängen die in den mittleren Profilblöcken verlaufenden Einschnitte gegenüber der Blockmittellinie in die Abrollrichtung bei Vorwärtsfahrt und die in den Schulterblöcken verlaufenden Einschnitte gegenüber der Blockmittelinie gegen die Abrollrichtung bei Vorwärtsfahrt versetzt sind. Durch diese Ausgestaltung sollen vor allem die Schulterblöcke beim Bremsen besonders gleichmäßig abreiben und sämtliche Profilblöcke sollen ein für die Bremseigenschaften und das Traktionsverhalten optimales Kippverhalten aufweisen, welches insgesamt einen gleichmäßigen Laufstreifenabrieb zur Folge hat.

Bei Fahrzeugreifen der eingangs genannten Art wird auf nassem Untergrund das Wasser durch die die Profilblöcke umlaufenden Rillen meist gut abgeleitet. Eine verbesserte Anpressdruckverteilung würde ein Ableiten von Wasser aus den Blockmitten nach außen beschleunigen bzw. verbessern.

Der Erfindung liegt daher die Aufgabe zugrunde, bei einem Fahrzeugreifen der eingangs genannten Art die Anpressdruckverteilung an den Außenflächen der Profiblöcke oder blockartigen Profilstrukturen unter Bedachtnahme auf einen gleichmäßigen Abrieb zu verbessern.

Gelöst wird die gestellte Aufgabe erfindungsgemäß dadurch, dass die Außenflächen der Profilblöcke oder blockartigen Profilstrukturen durchgehend nach außen bauchig gewölbt sind, derart, dass das Maximum der Wölbung jeweils im Bereich einer in Draufsicht gerade verlaufenden Linie liegt, welche die auf die Kantenlängen bezogenen Mittelpunkte von Blockkanten verbindet, welche
- entweder zum selben Profilblock oder zur selben blockartigen Profilstruktur gehören oder
- die äußersten Blockkanten von Doppelblöcken aus jeweils zwei in Umfangsrichtung aufeinander folgenden Profilblöcken oder blockartigen Profilstrukturen sind,
wobei die Wölbung der Außenflächen jeweils ausgehend von der jeweiligen Linie fortlaufend in Richtung zu und bis zu den Blockrändern abnimmt.

Gemäß der Erfindung ausgeführte Wölbungen an den Außenflächen der Profilblöcke oder blockartigen Profilstrukturen sorgen für eine gleichmäßige Anpressdruck-Gradientenverteilung von den Blockmitten nach außen. Diese Maßnahme gewährleistet kurze "Squeeze-Out-Distanzen" auf Nässe, das heißt der Verdrängungsweg von Wasser in die den Block bzw. die blockartige Profilstruktur begrenzenden Rillen ist bei Kontakt des Blocks bzw. der blockartigen Profilstruktur mit dem Untergrund besonders gering. Dadurch wird das Wasser auf nassem Untergrund besonders effektiv von den Mitten der Profilblöcke bzw. der blockartigen Profilstrukturen in die umgebenden Rillen abgeleitet.

Bei einer bevorzugten Ausführung weisen die bauchigen Wölbungen eine größte, in radialer Richtung ermittelte Höhe von 0,10 mm bis 1,00 mm, insbesondere von 0,30 mm bis zu 0,80 mm, auf. Die Wölbungen sind daher relativ niedrig und können somit einen gleichmäßigen Anpressdruck beim Abrollen der Reifen am Untergrund und gleichzeitig einen gleichmäßigen Abrieb des Laufstreifens sicherstellen.

In diesem Zusammenhang ist es ferner vorteilhaft, wenn die bauchigen Wölbungen von sämtlichen oder einigen Profilblöcken, Doppelblöcken oder blockartigen Profilstrukturen unterschiedliche größte Höhen aufweisen. Insbesondere ist es von Vorteil, wenn in axialer Richtung breitere Profilblöcke eine größere Höhe aufweisen als in axialer Richtung schmälere Profilblöcke.

Idealerweise sollte sich die größte Höhe der bauchigen Wölbungen entlang der erwähnten Linien befinden. Aus fertigungstechnischen Gründen sind kleine Abweichungen kaum vermeidbar. Die größte Höhe der bauchigen Wölbungen sollte sich jedoch vorteilhafterweise innerhalb eines Streifens mit einer Breite von 2,00 mm, in welchem jeweils die Linie verläuft, befinden.

Die bauchigen Wölbungen sind ferner bevorzugt derart ausgeführt, dass sie bei sämtlichen Profilblöcken, blockartigen Profilstrukturen oder Doppelblöcken an den seitlichen Blockrändern möglichst auf dem gleichen Niveau oder auf Niveaus enden, die sich in radialer Richtung um bis zu 1,00 mm voneinander unterscheiden. Diese Maßnahme ist ebenfalls für einen gleichmäßiger Abrieb des Laufstreifens vorteilhaft.

Je nach der Ausgestaltung der Profilblöcke und der blockartigen Profilstrukturen und des Verlaufs der Rillen, welche die Profilblöcke oder die blockartigen Profilstrukturen innerhalb der Doppelblöcke voneinander trennen, ist es für einen gleichmäßigen Abrieb des Laufstreifens zusätzlich von Vorteil, wenn diese Rillen miteinander fluchten bzw. unmittelbar aneinander anschließen.

Die zwischen Schräg- oder Querrillen verlaufenden Rillen sind gemäß einer weiteren Ausführung einschnittartig schmal ausgeführt und weisen daher an der Laufstreifenperipherie eine Breite von 0,40 mm bis 2,00 mm auf. Übliche sonstige Breiten der Rillen bewegen sich in der Größenordnung von bis zu 12,00 mm, ebenfalls jeweils an der Laufstreifenperipherie ermittelt.

Auch die Schräg- oder Querrillen können abschnittsweise, beispielsweise an ihren laufstreifeninnenseitigen Endabschnitten, einschnittartig schmal ausgeführt sein.

Besondere effektiv und vorteilhaft sind diese Ausgestaltungen bei Fahrzeugreifen mit einem laufrichtungsgebunden gestalteten Laufstreifen mit zueinander V-förmig verlaufenden Schrägrillen, von welchen jeweils eine in jeder Laufstreifenhälfte verläuft, wobei die Profilblöcke oder blockartigen Profilstrukturen an den Schrägrillen eine beim Abrollen des Reifens bei Vorwärtsfahrt zuerst in den Untergrund eintretende, einlaufende Blockkante und eine auslaufende Blockkante aufweisen, wobei die in Draufsicht gerade verlaufenden Linien, in deren Bereich jeweils das Maximum der Wölbung liegt, die auf die Kantenlängen bezogenen Mittelpunkte einer einlaufenden und einer auslaufenden Blockkante verbindet.

Weitere Merkmale, Vorteile und Einzelheiten der Erfindung werden nun anhand der Zeichnung, die Ausführungsbeispiele darstellt, näher beschrieben. Dabei zeigen
Fig. 1 ein einzelnes, in die Ebene abgewickeltes Profilstrukturelement (ein Pitch) eines Laufstreifens eines Fahrzeugreifens,
Fig. 2 ein in die Ebene abgewickeltes Doppelblock-Profilstrukturelement (ebenfalls ein Pitch) eines Laufstreifens eine Fahrzeugreifens,
Fig. 3 eine Schnittdarstellung entlang der Line III-III der Fig. 1 und
Fig. 4 eine vergrößerte Schnittansicht eines halbmittigen Profilblocks entlang der Linie IV-IV der Fig. 1.

Fahrzeugreifen gemäß der Erfindung sind Reifen für Kraftfahrzeuge, insbesondere für mehrspurige Kraftfahrzeuge, bevorzugt für Personenkraftwagen (PKW), Vans (Transporter) oder SUVs, sowie vorzugsweise Fahrzeugluftreifen, besonders bevorzugt Fahrzeugluftreifen in Radialbauart. PKW-, Van-, und SUV-Reifen sind insbesondere für Felgen mit einem ganzzahligen Felgendurchmesser von 13 Zoll bis 24 Zoll, bevorzugt von 15 Zoll bis 23 Zoll, vorgesehen und weisen einen Traglastindex von insbesondere 71 bis 126 auf.

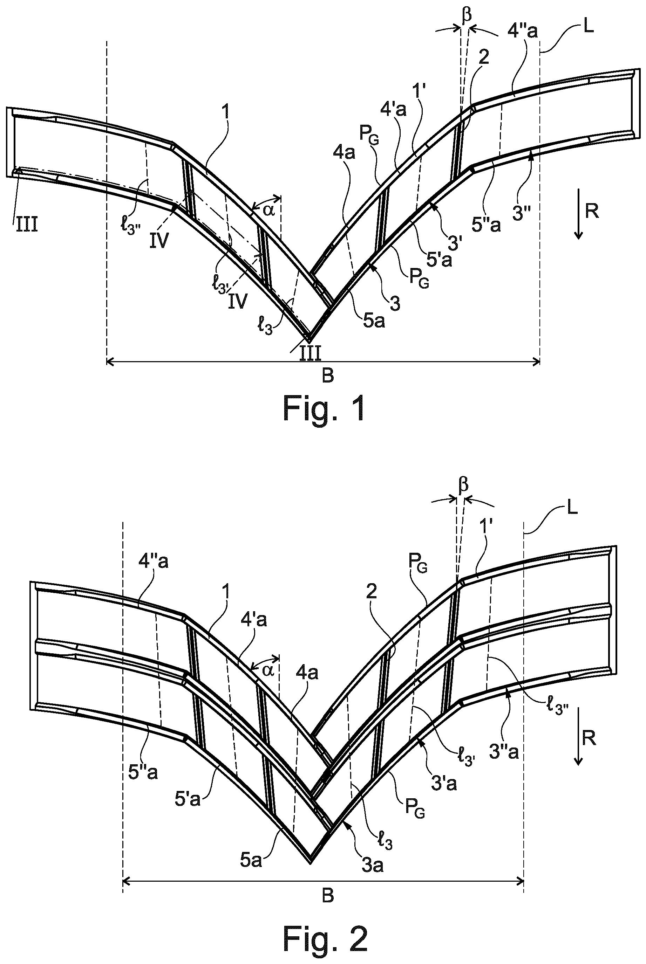

Fig. 1 und Fig. 2 zeigen Pitches von laufrichtungsgebunden gestalteten profilierten Laufstreifen, welche mit zueinander V-förmig verlaufenden Schrägrillen 1, 1' versehen sind, welche, wie dargestellt, beispielsweise über die Breite des Laufstreifens verlaufen. Die Abrollrichtung des Reifens bei Vorwärtsfahrt ist in Fig. 1 und Fig. 2 durch den Pfeil R gekennzeichnet.

In Fig. 1 und Fig. 2 sind die beiden seitlichen Ränder der Bodenaufstandsfläche des Reifens bzw. Laufstreifens mit L bezeichnet. Die Bodenaufstandsfläche entspricht dem statisch ermittelten Footprint, welcher mit einem auf einer Normfelge montierten Reifen bei einer Last bei 70 % der maximalen Tragfähigkeit, einem Innendruck von 85 % des Normdrucks, gemäß E.T.R.T.O-Standard in der geltenden Fassung, ermittelt ist. Die Breite B der Bodenaufstandsfläche ist daher der in axialer Richtung ermittelte größte Abstand zwischen den beiden seitlichen Rändern L der Bodenaufstandsfläche. Für die Erfindung ist die Ausgestaltung des Laufstreifens innerhalb der Bodenaufstandsfläche, also zwischen den seitlichen Rändern L, von Belang.

Fig. 1 zeigt ein einzelnes Profilstrukturelement, nachfolgend als einzelnes Pitch bezeichnet, Fig. 2 ein Doppelblock- Profilstrukturelement bestehend aus zwei gleichgestalteten einzelnen, durch Schrägrillen 1, 1' voneinander getrennten Profilstrukturelementen, nachfolgend als doppeltes Pitch bezeichnet. Sowohl das in Fig. 1 gezeigte einzelne Pitch als auch das in Fig. 2 gezeigte doppelte Pitch weisen jeweils Pitchgrenzen P_{G} auf, die durch die Schrägrillen 1, 1' hindurch verlaufen, sodass die Schrägrillen 1, 1', durch welche die Pitchgrenzen P_{G} verlaufen, nur zum Teil dargestellt sind. Dabei handelt es sich um eine übliche und an sich bekannte Ausgestaltung von Pitchgrenzen. Die weitere Anordnung und Ausgestaltung von in Umfangsrichtung unterschiedlich langen Pitches ist nicht Gegenstand dieser Erfindung und es wird auf sie daher näher nicht eingegangen. Das dargestellte einzelne Pitch sowie das dargestellte doppelte Pitch kann beispielsweise ein Pitch mit der längsten vorgesehenen Umfangslänge oder ein Pitch mit der kürzesten vorgesehen Umfangslänge sein.

Die zueinander V-förmig verlaufenden Schrägrillen 1, 1' schließen bei der Mittelumfangslinie M-M des Laufstreifens aneinander an und verlaufen zur Umfangsrichtung des Laufstreifens unter einem spitzen Winkel α von 15° bis 85°, insbesondere 30° bis 70°, wobei der Winkel α bei der Mittelumfangslinie M-M des Laufstreifens am kleinsten ist und in Richtung zu den Laufstreifenrändern L größer wird. Beim gezeigten Ausführungsbeispiel gliedern ferner in jeder Laufstreifenhälfte zwischen in Umfangsrichtung aufeinanderfolgenden Schrägrillen 1, 1' verlaufende zusätzliche Rillen 2 jedes einzelne Pitch in zwei mittige Profilblöcke 3, zwei halbmittige Profilblöcke 3' und zwei schulterseitige Profilblöcke 3" und jedes doppelte Pitch gemäß Fig. 2 in zwei mittige Doppelblöcke 3a aus zwei mittigen Profilblöcken 3, zwei halbmittige Doppelblöcke 3'a aus zwei halbmittigen Profilblöcken 3' und zwei schulterseitige Doppelblöcke 3"a aus zwei schulterseitigen Profilblöcken 3'. Die schulterseitigen Profilblöcke 3' und daher auch ihre Außenflächen enden an den seitlichen Rändern L der Bodenaufstandsfläche.

Die Rillen 2 verlaufen beim gezeigten Ausführungsbeispiel in jeder Laufstreifenhälfte jeweils parallel zueinander und gleichsinnig zu den Schrägrillen 1, 1' geneigt unter einem Winkel β von 5° bis 45°, insbesondere bis 20°, zur Umfangsrichtung. Die Rillen 2, welche in der einen Laufstreifenhälfte eine Gliederung in die Profilblöcke 3, 3', 3" bewirken, sind daher zu den Rillen 2, welche in der anderen Laufstreifenhälfte diese Gliederung bewirken, gegensinnig geneigt. Der Winkel β ist beim dargestellten Ausführungsbeispiel bei sämtlichen Rillen 2 gleich groß.

Beim doppelten Pitch gemäß Fig. 2 sind die Profilblöcke 3, 3', 3" innerhalb der Doppelblöcke 3a, 3'a und 3"a voneinander durch miteinander fluchtend bzw. unmittelbar aneinander anschließende Rillen 2 voneinander getrennt. Die in den Doppelblöcken 3'a einander zugeordneten halbmittigen Profilblöcke 3' sind daher gleich groß und gleich gestaltet, die in den Doppelblöcken 3a einander zugeordneten mittigen Profilblöcke 3 und die in den Doppelblöcken 3"a einander zugeordneten schulterseitigen Profilblöcke 3" sind jeweils geometrisch gleichartig gestaltet, jedoch ungleich groß.

Die Profilblöcke 3, 3', 3" im einzelnen Pitch weisen an den in Fig. 1 oberen Schrägrillen 1, 1 ' auslaufende Blockkanten 4a, 4'a, 4"a und an den in Fig. 1 unteren Schrägrillen 1, 1' einlaufende Blockkanten 5a, 5'a, 5"a auf. Die Doppelblöcke 3a, 3'a und 3"a weisen an den in Fig. 2 obersten Schrägrillen 1, 1' auslaufende Blockkanten 4a, 4'a, 4"a und an den untersten Schrägrillen 1, 1' einlaufende Blockkanten 5a, 5'a, 5"a auf. Die innerhalb der Doppelblöcke 3a, 3'a und 3"a verlaufenden Schrägrillen 1, 1' weisen zwar ebenfalls ein- und auslaufende Blockkanten auf, diese sind jedoch für die Erfindung nicht von Belang. Als "einlaufende" Blockkanten sind jene Blockkanten bezeichnet, welche beim Abrollen des Reifens bei Vorwärtsfahrt zuerst in den Untergrund eintreten, als "auslaufende" Blockkanten sind jene Blockkanten bezeichnet, welche beim Abrollen des Reifens bei Vorwärtsfahrt nachfolgend in den Untergrund eintreten. Weitere Ränder der Profilblöcke 3, 3', 3" und der Doppelblöcke 3a, 3'a und 3"a sind zwischen den Enden der ein- und auslaufenden Blockkanten verlaufende Blockränder, die beim gezeigten Ausführungsbeispiel zum Teil Blockkanten an den Rillen 2 sind, zum Teil von Abschnitten der Laufstreifenränder L gebildet sind und zum Teil die Endabschnitte von Schrägrillen 1, 1' (mittige Profilblöcke 3) sind.

Die Außenflächen der Profilblöcke 3, 3', 3" im einzelnen Pitch und der Doppelblöcke 3a, 3'a und 3"a sind auf besondere Weise nach außen bauchig gewölbt. Bei den Profilblöcken 3, 3', 3" im einzelnen Pitch weisen die Wölbungen ihre größte Höhe jeweils im Bereich von geraden Linien l₃, l_{3'} und l_{3"} auf, welche die Mittelpunkte der tatsächlichen Längen der Blockkanten 4a und 5a, der Blockkanten 4'a und 5'a und der Blockkanten 4"a und 5"a der Profilblöcke 3, 3' und 3" miteinander verbinden. Bei den Doppelblöcken 3a, 3'a und 3"a befindet sich die größte Höhe der Wölbungen jeweils im Bereich von geraden Linien l₃, l_{3'} und l_{3"}, welche die Mittelpunkte der der tatsächlichen Längen der äußersten einlaufenden Blockkanten 5a, 5'a, 5"a mit den Mittelpunkten der tatsächlichen Längen der ebenfalls äußersten Blockkanten 4a, 4'a, 4" a miteinander verbinden.

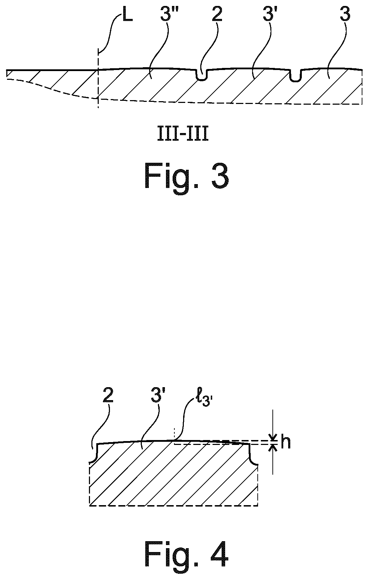

Die größte, in radialer Richtung ermittelte Höhe h (Fig. 3, Fig. 4) der bauchigen Wölbungen verläuft idealerweise entlang der Linien l₃, l_{3'} und l_{3"}, bevorzugt innerhalb eines Streifens einer Breite von 2,00 mm, wobei die Linien l₃, l_{3'} und l_{3"}, innerhalb dieses Streifens verlaufen, und beträgt 0,30 mm bis 1,00 mm, insbesondere bis zu 0,80 mm.

Die bauchigen Wölbungen auf den Außenflächen der Profilblöcke 3, 3' und 3" bzw. der Doppelblöcke 3a, 3'a und 3"a fallen ausgehend von den Linien l₃, l_{3'} und l_{3"} bzw. den jeweiligen Stellen mit der größten Höhe h in Richtung und bis zu den die Profilblöcke 3 und 3', 3" bzw. die Doppelblöcke 3a, 3'a und 3"a begrenzenden weiteren Kanten bzw. Ränder ab, sodass an diesen Kanten bzw. Rändern (Laufstreifenränder L) die Wölbung, bei sämtlichen Profilblöcken 3, 3' und 3" bzw. Doppelblöcken 3a, 3'a und 3"a auf gleichem Niveau, endet. Das Gefälle ist daher nicht gleichmäßig, sondern ist bei geringeren Entfernungen von der höchsten Stelle größer als bei größeren Entfernungen.

Bei weiteren nicht dargestellten Varianten weisen die oder einige Profilblöcke geknickte und/oder gerundete Blockkanten bzw. Blockränder auf. Die Rillen 2 können schmale, einschnittartig gestaltete Rillen sein, die an der Laufstreifenperipherie eine Breite von 0,40 mm bis 1,20 mm aufweisen. Die Schrägrillen 1, 1' können abschnittsweise, beispielsweise an ihren laufstreifeninnenseitigen Enden, ebenfalls einschnittartig gestaltet sein.

Die Profilblöcke könne ferner mit üblichen, insbesondere die Profilblöcke parallel zu den Schrägrillen verlaufenden Einschnitten versehen sein.

Bei alternativen Ausführungen ist der Laufstreifen nicht laufrichtungsgebunden gestaltet und weist vorzugsweise parallel zueinander verlaufenden Schräg- oder Querrillen auf, welche zur Umfangsrichtung unter Winkeln von 15° bis 85°, insbesondere bis 70°, verlaufen, wobei einander kreuzende Schräg- oder Querrillen oder in Umfangsrichtung aufeinanderfolgende Schräg- oder Querrillen verbindende Rillen, letztere gemeinsam mit Schräg- oder Querrillen, Profilblöcke oder blockartige Profilstrukturen begrenzen und/oder mitbegrenzen. An den Schräg- oder Querrillen befindliche Blockkanten sind jene, deren Mittelpunkte miteinander verbunden die Linien ergeben, in deren Bereich das Maximum der Wölbung liegt.

### Bezugszeichenliste

- 1: Schrägrille
- 2: Rille
- 3: mittiger Profilblock
- 3': halbmittiger Profilblock
- 3": schulterseitiger Profilblock
- 3a: mittiger Doppelblock
- 3'a: halbmittiger Doppelblock
- 3"a: schulterseitiger Doppelblock
- 4a, 4'a, 4"a: auslaufende Blockkante
- 5a, 5'a, 5'a: einlaufende Blockkante
- B: Breite der Bodenaufstandsfläche
- h: Höhe
- L: seitlicher Rand der Bodenaufstandsfläche
- l₃, l_{3'}, l_{3"}: Linie
- M-M: Mittelumfangslinie
- P_{G}: Pitchgrenze
- α, β: Winkel

## Patentansprüche

1. Fahrzeugreifen mit einem profilierten Laufstreifen mit vorzugsweise parallel zueinander verlaufenden Schräg- oder Querrillen (1,1'), welche zur Umfangsrichtung unter Winkeln von 15° bis 85° verlaufen, wobei einander kreuzende Schräg- oder Querrillen oder in Umfangsrichtung aufeinanderfolgende Schräg- oder Querrillen (1, 1') verbindende Rillen (2), letztere gemeinsam mit den Schräg- oder Querrillen (1, 1'), Profilblöcke (3, 3', 3", 3a, 3'a, 3"a) oder blockartige Profilstrukturen begrenzen und/oder mitbegrenzen, die an den Schräg- oder Querrillen (1, 1') von Blockkanten (5a, 5'a, 5"a, 4a, 4'a, 4"a) sowie von weiteren, zwischen den Enden der Blockkanten (5a, 5'a, 5"a, 4a, 4'a, 4"a) verlaufenden Blockrändern begrenzt sind, wobei jeder Blockrand entweder eine Blockkante oder der eine seitliche Rand (L) der Bodenaufstandsfläche ist,
**dadurch gekennzeichnet,**
**dass** die Außenflächen der Profilblöcke (3, 3', 3", 3a, 3'a, 3"a) oder blockartigen Profilstrukturen durchgehend nach außen bauchig gewölbt sind, derart, dass das Maximum der Wölbung jeweils im Bereich einer in Draufsicht gerade verlaufenden Linie (l₃, l_{3'}, l_{3"}) liegt, welche die auf die Kantenlängen bezogenen Mittelpunkte von Blockkanten (5a, 5'a, 5"a, 4a, 4'a, 4"a) verbindet, welche
- entweder zum selben Profilblock (3, 3', 3") oder zur selben blockartigen Profilstruktur gehören oder
- die äußersten Blockkanten von Doppelblöcken (3a, 3'a, 3"a) aus jeweils zwei in Umfangsrichtung aufeinander folgenden Profilblöcken (3, 3', 3") oder blockartigen Profilstrukturen sind,
wobei die Wölbung der Außenflächen jeweils ausgehend von der jeweiligen Linie (l₃, l_{3'}, l_{3"}) fortlaufend in Richtung zu und bis zu den Blockrändern abnimmt.

2. Fahrzeugreifen nach Anspruch 1, **dadurch gekennzeichnet, dass** die bauchigen Wölbungen eine größte, in radialer Richtung ermittelte Höhe (h) von 0,10 mm bis 1,00 mm, insbesondere von 0,30 mm bis zu 0,80 mm, aufweisen.

3. Fahrzeugreifen nach Anspruch 1 oder 2, **dadurch gekennzeichnet, dass** die bauchigen Wölbungen von sämtlichen oder einigen Profilblöcken (3, 3', 3"), Doppelblöcken oder blockartigen Profilstrukturen unterschiedliche größte Höhen (h) aufweisen.

4. Fahrzeugreifen nach einem der Ansprüche 1 bis 3, **dadurch gekennzeichnet, dass** sich die größte Höhe (h) der bauchigen Wölbungen innerhalb eines Streifens mit einer Breite von 2,00 mm, in welchem jeweils die Linie (l₃, l_{3'}, l_{3"}) liegt, befindet.

5. Fahrzeugreifen nach einem der Ansprüche 1 bis 4, **dadurch gekennzeichnet, dass** die bauchigen Wölbungen sämtlicher Profilblöcke (3, 3', 3"), blockartigen Profilstrukturen oder Doppelblöcken (3a, 3'a, 3"a) an den seitlichen Blockrändern auf dem gleichen Niveau oder auf Niveaus enden, die sich in radialer Richtung um bis zu 1,00 mm voneinander unterscheiden.

6. Fahrzeugreifen nach einem der Ansprüche 1 bis 5, **dadurch gekennzeichnet, dass** die Rillen (2), welche die Profilblöcke (3, 3', 3") oder blockartigen Profilstrukturen innerhalb der Doppelblöcke (3a, 3'a, 3"a) voneinander trennen, unmittelbar aneinander anschließen.

7. Fahrzeugreifen nach einem der Ansprüche 1 bis 6, **dadurch gekennzeichnet, dass** Rillen (2) vorhanden sind, welche einschnittartig schmal ausgeführt sind.

8. Fahrzeugreifen nach einem der Ansprüche 1 bis 7, **dadurch gekennzeichnet, dass** Schräg- oder Querrillen (1, 1') vorhanden sind, welche abschnittsweise, beispielsweise an ihren laufstreifeninnenseitigen Enden, einschnittartig schmal ausgeführt sind.

9. Fahrzeugreifen nach einem der Ansprüche 1 bis 8, mit einem laufrichtungsgebunden gestalteten Laufstreifen mit zueinander V-förmig verlaufenden Schrägrillen (1, 1'), von welchen jeweils eine in jeder Laufstreifenhälfte verläuft, wobei die Profilblöcke (3, 3', 3", 3a, 3'a, 3"a) oder blockartigen Profilstrukturen an den Schrägrillen (1,1') eine beim Abrollen des Reifens bei Vorwärtsfahrt zuerst in den Untergrund eintretende, einlaufende Blockkante (5a, 5'a, 5"a) und eine auslaufende Blockkante (4a, 4'a, 4"a) aufweisen, wobei die in Draufsicht gerade verlaufenden Linien (l₃, l_{3'}, l_{3"}), in deren Bereich jeweils das Maximum der Wölbung liegt, die auf die Kantenlängen bezogenen Mittelpunkte einer einlaufenden und einer auslaufenden Blockkante (5a, 5'a, 5"a, 4a, 4'a, 4"a) verbindet.
